# EUROPÄISCHE PATENTANMELDUNG

(11) **EP 3 018 022 A2**
(43) Veröffentlichungstag der Anmeldung: **11.05.2016**
(21) Anmeldenummer: 15190153.5
(22) Anmeldetag: 16.10.2015
(51) Int. Cl.: B60T 17/22, B62L 1/06

(54) **FELGENBREMSE UND BREMSSCHUH**

(30) Priorität: 16.10.2014 DE 102014221069
(71) Anmelder: Gustav Magenwirth GmbH & Co. KG, 72574 Bad Urach (DE)
(72) Erfinder: Fritschle, Stefan, 72574 Bad Urach- Wittlingen (DE); Künstle, Reiner, 72555 Metzingen (DE); Ruckh, Stefan, 72587 Römerstein (DE)
(74) Vertreter: Andrae | Westendorp Patentanwälte Partnerschaft

(57) **Zusammenfassung**

Die Erfindung betrifft eine Hydraulische Felgenbremse (1) mit zumindest einem, am Rahmen eines Fahrzeuges befestigbaren Nehmerzylindergehäuse (100), welches zumindest einen Druckraum und einen im Druckraum verschiebbar gelagerten Nehmerzylinder enthält, wobei das Nehmerzylindergehäuse (100) in einer Klemmschelle (6) zur Befestigung am Rahmen aufgenommen ist, welche ein Langloch (65) enthält und weiterhin ein Excenterbolzen (7) vorhanden ist, dessen Längserstreckung parallel zur Längserstreckung des Langlochs (65) verläuft. Weiterhin betrifft die Erfindung eine hydraulische Felgenbremse (1), bei welcher das Nehmerzylindergehäuse zumindest einen Befestigungsarm (120, 130) aufweist, welcher ein erstes Langloch (122, 132) enthält, und weiterhin zumindest ein Gleitstück (55) vorhanden ist, welches entlang der Längserstreckung des Befestigungsarmes (120, 130) verschiebbar ist. Schließlich betrifft die Erfindung einen Bremsschuh (10) für eine Felgenbremse (1) mit einem Bremsbelag (2) und einem Träger (3), wobei der Bremsschuh (2) weiterhin zumindest eine Justierhilfe (4) enthält, welche mit dem Bremsbelag (2) und/oder dem Träger (3) lösbar verbunden ist.

## Beschreibung

Die Erfindung betrifft ein Bremsschuh für eine Felgenbremse mit einem Bremsbelag und einem Träger. Weiterhin betrifft die Anmeldung eine Felgenbremse mit einem solchen Bremsschuh sowie ein Verfahren zur Montage einer Felgenbremse mit zumindest einem Bremsschuh. Schließlich betrifft die Erfindung eine hydraulische Felgenbremse mit zumindest einem, am Rahmen eines Fahrzeuges befestigbaren Nehmerzylindergehäuse, welches zumindest einen Druckraum und einen Druckraum verschiebbar gelagerten Nehmerzylinder enthält. Bremsschuhe und Felgenbremsen der eingangs genannten Art können beispielsweise für Lenkergeführte Fahrzeuge wie Fahrräder oder E-Bikes verwendet werden.

Aus der DE 33 361 23 A1 ist eine hydraulische Felgenbremse bekannt. Diese weist einen am Lenker des Fahrrades befestigten, durch einen Handhebel betätigbaren Geberzylinder auf. Der Geberzylinder dient dazu, ein Hydraulikfluid unter Druck zu setzen. Das Hydraulikfluid wird zwei am Rahmen des Fahrrades einander gegenüberliegend befestigten und eine Radfelge zwischen sich einschließenden Nehmerzylindern zugeführt. Die in den Nehmerzylindern angeordneten, verschiebbaren Kolben führen dann die Bremsschuhe mit den darin angeordneten Bremsbelägen gegen die Reibflächen an den Flanken der Felge.

Die Nehmerzylindergehäuse dieser bekannten Bremse sind mit zwei Schrauben an zugeordneten Anlötsockeln des Fahrradrahmens befestigt. Somit ist eine Verstellung der relativen Lage zwischen Felge und Bremsbelag nicht möglich, so dass sowohl die Laufräder als auch der Rahmen des Fahrrades mit äußerst geringen Toleranzen gefertigt werden muss.

Aus der Praxis ist weiter bekannt, die Nehmerzylindergehäuse in einer Klemmschelle aufzunehmen, so dass die Nehmerzylindergehäuse in der Klemmschelle drehbar, verschiebbar und schwenkbar sind. Die Klemmschelle selbst kann über Langlöcher am Rahmen des Fahrrades verschiebbar sein, so dass die Bremsbeläge relativ zur Reibfläche an der Felge justierbar sind. Diese bekannte Lösung weist jedoch den Nachteil auf, dass die Justage der Felgenbremse aufgrund der Vielzahl an Freiheitsgraden des Nehmerzylindergehäuses sehr aufwändig und langwierig ist.

Ausgehend vom Stand der Technik liegt der Erfindung somit die Aufgabe zugrunde, die Montage einer hydraulischen Felgenbremse zu vereinfachen.

Die Aufgabe wird erfindungsgemäß durch einen Bremsschuh gemäß Anspruch 1, ein Montageverfahren gemäß Anspruch 6, eine hydraulische Felgenbremse gemäß Anspruch 8 und eine hydraulische Felgenbremse gemäß Anspruch 13 gelöst. Vorteilhafte Weiterbildungen der Erfindung finden sich in den jeweiligen Unteransprüchen.

In einem ersten Aspekt der Erfindung wird vorgeschlagen, einen Bremsschuh für eine Felgenbremse, welcher einen Bremsbelag und einen Träger aufweist, mit zumindest einer Justierhilfe zu versehen. Der Träger kann in an sich bekannter Weise aus Metall oder Kunststoff gefertigt sein. Auf der dem Bremsbelag abgewandten Seite des Trägers kann dieser eine Befestigungsvorrichtung aufweisen, um den Bremsschuh mit einem Bremsarm oder einer hydraulischen Betätigungsvorrichtung zu verbinden. Der Bremsarm kann Teil einer an sich bekannten Bremszange, einer V-Brake oder einer U-Brake oder einer Cantileverbremse sein. Der Bremsarm kann hydraulisch über zumindest einen Hydraulikzylinder mit einem Druckraum und einem Kolben oder mechanisch über einen Bowdenzug betätigt werden, so dass der Bremsschuh mit dem darin befestigten Bremsbelag gegen die Reibfläche einer Felge geführt werden kann. Die Befestigungsvorrichtung am Träger kann beispielsweise eine Verschraubung oder eine Rastverbindung sein, welche in ein entsprechend geformtes Gegenstück am Nehmerzylinder bzw. am Bremsarm eingreift.

Der Bremsbelag kann aus Kunststoff, Kork oder Gummi bestehen oder diese Materialien enthalten. Der Bremsbelag kann zumindest eine Nut aufweisen, um bei feuchter Witterung Feuchtigkeit von der Reibfläche abzuführen. Der Bremsbelag kann in unterschiedlichen Ausführungen angeboten werden, beispielsweise um optimale Bremsleistung auf unterschiedlichen Felgenoberflächen zu ermöglichen oder um unterschiedlichen Vorlieben unterschiedlicher Fahrer gerecht zu werden.

Der erfindungsgemäße Bremsschuh ist weiterhin mit einer Justierhilfe ausgestattet, welche mit dem Bremsbelag und/oder dem Träger lösbar verbunden ist. Die Justierhilfe kann beispielsweise zumindest einen Stift und/oder ein Anschlagelement enthalten oder daraus bestehen, welches zumindest in einer Richtung über die Oberfläche des Bremsbelages übersteht. Somit kann der Bremsbelag so in die Felgenbremse eingebaut werden, dass die Justierhilfe an der Reibfläche der Felge anliegt. Darüber hinaus kann eine Justierhilfe in Form eines Stiftes so am Bremsschuh angeordnet sein, dass diese die Oberkante und/oder die Unterkante und/oder die Mitte des Bremsbelages markiert. Dies erleichtert die Ausrichtung des Bremsbelages an der Reibfläche der Felge, so dass der Bremsbelag weder in Kontakt mit dem Reifen kommt, noch an der Unterseite der Felge übersteht. Hierdurch wird die maximale Eingriffsfläche zwischen Bremsbelag und Bremsschuh und damit die maximale Bremsleistung ermöglicht, ohne dass Schäden an der Felge oder der Bereifung auftreten.

In einigen Ausführungsformen der Erfindung kann der Bremsschuh zumindest zwei Justierhilfen aufweisen, welche an der Vorder- und der Hinterkante des Bremsbelages angeordnet sind. Damit kann auch eine einfache Einstellung des Winkels erfolgen, so dass der Bremsbelag parallel bzw. tangential zur Felge verläuft.

In einigen Ausführungsformen der Erfindung kann die Justierhilfe zumindest eine erste Anlagefläche aufweisen, welche etwa 0,8 bis etwa 3 mm oder etwa 1 mm bis etwa 2 mm oder etwa 1,5 mm über eine Reibfläche des Bremsbelages übersteht. Auf diese Weise kann das Lüftungsspiel zwischen Bremsbelag und Felge in einfacher Weise dadurch eingestellt werden, dass der Bremsbelag so montiert wird, dass die erste Anlagefläche der Justierhilfe vollflächig an der Reibfläche der Felge anliegt.

In einigen Ausführungsformen der Erfindung kann die Justierhilfe zumindest eine zweite Anlagefläche aufweisen, deren Normalenvektor mit dem Normalenvektor der Reibfläche des Bremsbelages einen Winkel von etwa 70° bis etwa 100° einschließt und welche von einer Verlängerung der Unterkante der Reibfläche einen Abstand von etwa 0 mm bis etwa 3 mm aufweist. Dies ermöglicht eine besonders einfache Einstellung der Höhe des Bremsschuhs, in dem die zweite Anlagenfläche mit der Innenseite der Felge in Kontakt gebracht und der Bremsschuh mit seiner Befestigungsvorrichtung an der Felgenbremse montiert wird.

Nach erfolgter Montage des Bremsschuhs wird die Justierhilfe vom Bremsschuh entfernt, so dass die Felge zwischen den Bremsschuhen frei rotieren kann und bei Betätigung der Felgenbremse die Reibfläche des Bremsbelages vollflächig in Kontakt mit der Reibfläche der Felge kommt, ohne dass der Bremsschuh ganz oder teilweise mit dem Reifen in Kontakt gerät und diesen dabei beschädigt.

In einigen Ausführungsformen der Erfindung kann die Justierhilfe mit dem Bremsbelag und/oder dem Träger durch eine Sollbruchstelle verbunden sein. Dies erhöht einerseits den Komfort und andrerseits die Sicherheit für den Benutzer, da die Justierhilfe nach erfolgter Montage des Bremsschuhs bei der erstmaligen Betätigung der Bremse automatisch entfernt wird. Somit kann ein zusätzlicher Arbeitsgang für die Entfernung der Justierhilfe entfallen und die Bremse ist auch dann einsatzfähig, wenn vergessen wird, die Justierhilfe vor der ersten Benutzung zu entfernen.

In einigen Ausführungsformen der Erfindung können die Justierhilfe und der Träger mit einem Filmscharnier miteinander verbunden sein. Ein solches Filmscharnier erlaubt es, die Justierhilfe mit dem Träger einstückig im Spritzgussverfahren zu fertigen, so dass die Justierhilfe ohne weiteren Fertigungsaufwand als integraler Bestandteil des Bremsschuhs vorhanden ist. Gleichzeitig kann das Filmscharnier so dimensioniert werden, dass dieses bei der ersten Betätigung der Bremse bricht, so dass die Justierhilfe automatisch vom Bremsschuh entfernt wird, wenn der Benutzer die Bremse probeweise oder bei der ersten Benutzung betätigt.

In einigen Ausführungsformen der Erfindung betrifft diese eine hydraulische Felgenbremse mit zumindest einem, am Rahmen des Fahrzeugs befestigbaren Nehmerzylindergehäuse. Im Nehmerzylindergehäuse befinden sich zumindest ein Druckraum und ein im Druckraum verschiebbar gelagerter Nehmerkolben. Zur Erhöhung der Bremskraft kann in einigen Ausführungsformen der Erfindung auch eine Mehrzahl von Nehmerkolben vorgesehen sein, welche jeweils in zugeordneten Druckräumen verschiebbar gelagert sind.

Der Druckraum kann im Nehmerzylindergehäuse durch Urformen oder durch spanende Bearbeitung ausgeformt werden. Bei Betrieb der Felgenbremse ist der Druckraum des Nehmerzylindergehäuses mit einer Bremsleitung mit einem Geberzylinder verbunden. Geberzylinder, Bremsleitung und Druckraum sind mit einem Hydraulikfluid gefüllt, beispielsweise einem Mineralöl. Bei Betätigung des Geberzylinders, beispielsweise durch einen Handhebel oder ein Fußpedal, wird Druck im Druckraum erzeugt, so dass der Nehmerzylinder aus dem Druckraum ausgeschoben wird. Hierdurch kann ein mit dem Nehmerzylinder gekoppelter Bremsschuh gegen die Reibfläche einer Felge eines Fahrzeuges, beispielsweise eines Fahrrades, geführt werden. Wenn der Druck im Druckraum abnimmt, kann der Kolben durch eine Rückholfeder wieder in den Druckraum eingefahren werden.

Erfindungsgemäß wird nun vorgeschlagen, dass das Nehmerzylindergehäuse zumindest einen Befestigungsarm aufweist, welches ein erstes Langloch enthält. Das Langloch erlaubt die Montage des Nehmerzylindergehäuses am Rahmen des Fahrzeuges, wobei Fertigungstoleranzen durch Verschieben entlang des Langloches ausgeglichen werden können. In einigen Ausführungsformen der Erfindung kann das Langloch einen quaderförmigen Querschnitt aufweisen, um ein Verschieben in zwei Richtungen zu ermöglichen.

Die im Langloch geführte Montageschraube wirkt erfindungsgemäß auf ein Gleitstück ein, welches entlang der Längserstreckung des Befestigungsarmes verschiebbar ist. Hierdurch kann die Vorspannung der Verschraubung flächig in den Befestigungsarm eingeleitet werden, so dass eine Beschädigung durch Kaltverformung oder plastisches Fließen vermieden wird.

Das Nehmerzylindergehäuse und der Befestigungsarm können aus einem Metall oder einer Legierung gefertigt sein, beispielsweise in einem Druckgussverfahren. In anderen Ausführungsformen der Erfindung können das Nehmerzylindergehäuse und der Befestigungsarm ein Thermoplast enthalten oder daraus bestehen und beispielsweise in einem Spritzgussverfahren gefertigt sein. Darüber hinaus kann im Material des Nehmerzylindergehäuses eine Faserverstärkung vorhanden sein, beispielsweise durch Glas- und/oder Aramid- und/oder Kohlenstofffasern.

In einigen Ausführungsformen der Erfindung können der Befestigungsarm und das Nehmerzylindergehäuse einstückig miteinander verbunden sein. Hierdurch wird eine einfache Herstellung sichergestellt, da ein zusätzlicher Arbeitsschritt für das Fügen der Bauteile vermieden wird. Darüber hinaus ist eine aufwändige Justage entbehrlich, da das Nehmerzylindergehäuse und der Befestigungsarm stets in derselben, durch das Formwerkzeug vorgegebenen relativen Lage zueinander gefertigt werden. Schließlich kann die Bruchlast zwischen Befestigungsarm und Nehmerzylindergehäuse erhöht sein, wenn keine Fügestelle zwischen diesen Bauteilen vorhanden ist.

In einigen Ausführungsformen der Erfindung kann der Befestigungsarm an seinem vom Nehmerzylindergehäuse entfernten Ende ein Anschlagelement aufweisen. Das Anschlagelement kann verhindern, dass das Gleitstück vom Nehmerzylindergehäuse herunterrutscht und dadurch verloren geht, wenn die Felgenbremse nicht an einem Fahrzeug montiert ist. Dadurch kann die Montage erleichtert sein, da die aufwändige Suche nach Kleinteilen entfällt.

In einigen Ausführungsformen der Erfindung kann das Anschlagelement einstückig im Spritzgussverfahren am Befestigungsarm ausgeformt werden. Ein zusätzlicher Montageschritt für die Herstellung und/oder das Fügen des Anschlagelementes kann somit vermieden werden.

In einigen Ausführungsformen der Erfindung kann das Anschlagelement nach der Montage des Gleitstückes am Befestigungsarm montiert werden, beispielsweise durch eine Verklebung oder eine Verschweißung. Dies erleichtert die Endmontage des Gleitstückes, da dieses vom Ende auf den Befestigungsarm aufgeschoben werden kann.

In einigen Ausführungsformen der Erfindung kann das Gleitstück eine Riffelung aufweisen. Die Riffelung kann an zumindest einer dem Befestigungsarm zugewandten Teilfläche des Gleitstückes vorhanden sein, so dass eine formschlüssige Verbindung zwischen Gleitstück und Befestigungsarm möglich ist. Hierdurch kann die zur Montage erforderliche Schraubenvorspannung vermindert sein.

In einigen Ausführungsformen der Erfindung weist das Gleitstück ein zweites Langloch auf, welches in etwa senkrecht zum ersten Langloch orientiert ist. Auf diese Weise wird eine Justage des Nehmerzylindergehäuses und somit des mit dem Nehmerzylindergehäuse verbundenen Bremsbelages in zwei Raumrichtungen ermöglicht, in dem die Montageschraube innerhalb der ersten Langlöcher verschoben wird, um das Nehmerzylindergehäuse entlang der Längserstreckung der ersten Langlöcher zu verschieben. Für eine Justage quer zum Verlauf der ersten Langlöcher kann die Montageschraube in die zweiten Langlöchern verschoben werden. Sofern die Positionierung der Schraube in den oberen und unteren Langlöchern der jeweils zugeordneten oberen und unteren Befestigungsarme unterschiedlich erfolgt, kann auch der Winkel des Nehmerzylindergehäuses variiert werden.

In einigen Ausführungsformen der Erfindung kann das Gleitstück als Stanzteil ausgeführt sein. In einigen Ausführungsformen der Erfindung kann das Stanzteil ein Stahlblech enthalten oder daraus entstehen. Das Gleitstück kann somit elastisch verformt werden, um die Montage auf dem Befestigungsarm zu ermöglichen. Nach erfolgter Montage federt das Gleitstück in seine Ausgangslage zurück, so dass dieses ohne weitere Krafteinwirkung nicht mehr vom Montagearm herunterfällt und zwischen der Herstellung des Nehmerzylindergehäuses und der Endmontage der Felgenbremse am Fahrzeug nicht verloren gehen kann.

In einigen Ausführungsformen der Erfindung kann ein Bremsschuh eine dem Nehmerzylindergehäuse zugewandte Fläche mit einer Verzahnung aufweisen, welche bei Montage des Bremsschuhs in eine komplementäre Verzahnung des Nehmerzylindergehäuses eingreift. Dies ermöglicht eine Einstellung des Winkels des Bremsbelages, so dass die Felgenbremse universell für unterschiedliche Hinterbau- bzw. Gabelwinkel verwendbar ist.

In einigen Ausführungsformen der Erfindung weist die Verzahnung eine Tiefe auf, welche größer ist als der Hub des Nehmerkolbens im Druckraum. Somit können auf dem Bremsschuh einwirkende Momente auch bei zunehmendem Belagverschleiß zuverlässig vom Nehmerzylindergehäuse abgetragen werden, ohne dass solche Momente auf den Kolben einwirken und diesen dabei beschädigen.

In einigen Ausführungsformen der Erfindung kann die Felgenbremse weiterhin ein Führungselement enthalten, welches zumindest einen vorstehenden Führungszapfen aufweist und welches am Nehmerzylindergehäuse drehbar befestigt ist. Dies ermöglicht die Winkeleinstellung des Bremsbelages, so dass dieser parallel bzw. tangential zur Reibfläche der Felge verläuft. Darüber hinaus werden alle auf den Bremsbelag einwirkenden Momente über die Führungszapfen auf das Nehmerzylindergehäuse abgetragen, so dass der Kolben durch diese Momente nicht beschädigt werden kann.

In einigen Ausführungsformen der Erfindung kann das Führungselement zumindest eine Klemmschelle aufweisen, welche einen Abschnitt des Nehmerzylindergehäuses außen umgreift. Dies ermöglicht eine besonders einfache Winkeleinstellung, da der Bremsschuh nach Lösen der Klemmschelle verdrehbar ist. Nach korrekter Justage des Bremsbelages relativ zur Felge kann die Klemmschelle festgeschraubt werden, so dass die einmal gefundene Einstellung dauerhaft fixiert ist.

In einigen Ausführungsformen der Erfindung betrifft diese eine hydraulische Felgenbremse mit zumindest einem, am Rahmen des Fahrzeugs befestigbaren Nehmerzylindergehäuses. Das Nehmerzylindergehäuse kann beispielsweise aus einem Metall oder einer Legierung oder einem Polymer gefertigt sein. Das Nehmerzylindergehäuse kann darüber hinaus eine Faserverstärkung enthalten, beispielsweise in Form von Glas- und/oder Kohle- und/oder Aramidfasern. Das Nehmerzylindergehäuse kann beispielsweise durch ein Druckguss- oder ein Spritzgussverfahren hergestellt werden.

Im Nehmerzylindergehäuse ist zumindest ein Druckraum ausgeformt, in welchem ein verschiebbar gelagerter Kolben vorhanden ist. Sofern ein Hydraulikfluid im Druckraum unter Druck gesetzt wird, wird der Kolben aus dem Druckraum ausgeschoben, so dass dieser eine Bremskraft auf eine Reibpaarung ausüben kann, welche zumindest eine an der Felge befindliche Reibfläche und einen Bremsbelag enthält. Nach Verringerung des Druckes im Druckraum kann der Kolben durch eine Rückholfeder in seine Ausgangslage bewegt werden, so dass zwischen dem Bremsbelag und der Reibfläche der Felge ein Lüftungsspiel eingehalten wird.

Zur Befestigung des Nehmerzylindergehäuses am Fahrzeug wird eine Klemmschelle vorgeschlagen, welche ein Langloch enthält. Dadurch kann die Klemmschelle entlang der Längserstreckung des Langloches am Rahmen verschoben werden, so dass das Nehmerzylindergehäuse an unterschiedlichen Stellen bzw. in unterschiedlicher relativer Position zum Rahmen des Fahrzeuges befestigt werden kann. Hierdurch kann das Nehmerzylindergehäuse so eingestellt werden, dass der Bremsbelag weder unten über die Reibfläche übersteht, noch mit dem Reifen in Kontakt gerät und diesen dadurch zerstört. Erfindungsgemäß ist zur Befestigung der Klemmschelle am Rahmen ein Exzenterbolzen vorgesehen, dessen Längserstreckung parallel zur Längserstreckung des Langloches verläuft. Der Exzenterbolzen kann von einer geöffneten Stellung in eine geschlossene Stellung bewegt werden. In der geöffneten Stellung des Exzenterbolzens ist das Langloch freigegeben, so dass die Klemmschelle mit dem Nehmerzylindergehäuse am Rahmen des Fahrzeuges montiert werden kann. Nach Abschluss der Montage kann der Exzenterbolzen in eine geschlossene Stellung bewegt werden, in welcher der freie Querschnitt des Langloches zumindest teilweise verlegt ist. Hierdurch wird die Klemmschelle am Rahmen des Fahrzeuges gesichert und endgültig befestigt.

In einigen Ausführungsformen der Erfindung kann der Exzenterbolzen in einer Bohrung aufgenommen sein, welche in einem Vorderteil der Klemmschelle angebracht ist. Auf diese Weise kann das Vorderteil der Klemmschelle durch den Exzenterbolzen am Rahmen des Fahrzeuges befestigt werden. Das Hinterteil der Klemmschelle liegt dann am Rahmen an, so dass über den Exzenterbolzen und das Vorderteil auch eine Anpresskraft auf das Hinterteil der Klemmschelle ausgeübt und diese dadurch geschlossen wird. Hierdurch kann eine Montagekraft auf das in der Klemmschelle aufgenommene Nehmerzylindergehäuse ausgeübt werden, so dass durch Schließen des Exzenterbolzens eine vollständige Festlegung des Nehmerzylindergehäuses am Rahmen des Fahrzeuges erfolgt. Somit kann der Benutzer des Fahrzeuges eine Justage des Nehmerzylindergehäuses vornehmen, solange sich der Exzenterbolzen in der geöffneten Stellung befindet und durch Schließen des Exzenterbolzens alle Freiheitsgrade des Nehmerzylindergehäuses nur einem Handgriff fixieren.

In einigen Ausführungsformen der Erfindung kann der Exzenterbolzen in zumindest einem ersten Längsabschnitt einen runden Querschnitt aufweisen, und in zumindest einem zweiten Längsabschnitt einen Querschnitt aufweisen, welcher von einer Kreissehne und einem Kreisbogen begrenzt wird. Ein solcher Exzenterbolzen kann einfach hergestellt werden, in dem ein Rundmaterial, beispielsweise ein Draht, mit einer Einfräsung versehen wird. Die Tiefe der Einfräsung ist zumindest so gewählt, dass der freie Querschnitt des Langloches nicht durch den Exzenterbolzen verlegt ist, wenn die Kreissehne in Richtung der Öffnung des Langloches ausgerichtet ist. Durch Drehen des Exzenterbolzens wird der Kreisbogen in den lichten Querschnitt des Langloches geschwenkt, so dass dieser dadurch zumindest teilweise verlegt wird. Die Drehbewegung des Exzenterbolzens kann hierbei durch zumindest einen ersten Längsabschnitt mit rundem Querschnitt geführt werden.

In einigen Ausführungsformen der Erfindung kann am Rahmen des Fahrzeuges zumindest ein Pilzkopfzapfen vorhanden sein, welcher vom Exzenterbolzen hintergreifbar ist. Dies erlaubt eine einfache Montage, in dem der Pilzkopfzapfen durch das Langloch der Klemmschelle gesteckt wird, während der Exzenterbolzen in der geöffneten Stellung ist. Durch Drehen des Exzenterbolzens wird der lichte Querschnitt des Langloches verringert, so dass die Klemmschelle sicher hinter dem Pilzkopfzapfen verriegelt ist.

Nachfolgend soll die Erfindung ohne Beschränkung des allgemeinen Erfindungsgedankens näher erläutert werden. Dabei zeigt
Fig. 1 die rückwärtige Ansicht eines Bremsschuhs gemäß der vorliegenden Erfindung.
Fig. 2 zeigt die Positionierung eines Bremsschuhs an einer Felge.
Fig. 3 zeigt eine zweite Ansicht eines erfindungsgemäßen Bremsschuhs.
Fig. 4 zeigt ein Detail der Befestigung der Justierhilfe am Träger.
Fig. 5 zeigt ein Nehmerzylindergehäuse gemäß einer ersten Ausführungsform der Erfindung.
Fig. 6 erläutert das Zusammenwirken der Gleitstücke mit der Verschraubung.
Fig. 7 erläutert die Winkelverstellung des Bremsschuhs mit einer Verzahnung.
Fig. 8 erläutert die Winkelverstellung eines Bremsschuhs mit einem Führungselement.
Fig. 9 zeigt ein Nehmerzylindergehäuse gemäß einer zweiten Ausführungsform mit Klemmschelle im geöffneten Zustand.
Fig. 10 zeigt ein Nehmerzylindergehäuse gemäß einer zweiten Ausführungsform mit Klemmschelle im geschlossenen Zustand.
Fig. 11 zeigt das Vorderteil einer Klemmschelle in einer ersten Ansicht.
Fig. 12 zeigt das Vorderteil einer Klemmschelle in einer zweiten Ansicht.
Fig. 13 zeigt die Ansicht einer ersten Ausführungsform des Exzenterbolzens.
Fig. 14 zeigt den Querschnitt der ersten Ausführungsform des Exzenterbolzens im ersten Längsabschnitt.
Fig. 15 zeigt den Querschnitt der ersten Ausführungsform des Exzenterbolzens im zweiten Längsabschnitt.
Fig. 16 zeigt die Ansicht einer zweiten Ausführungsform des Exzenterbolzens.
Fig. 17 zeigt den Querschnitt der zweiten Ausführungsform des Exzenterbolzens.

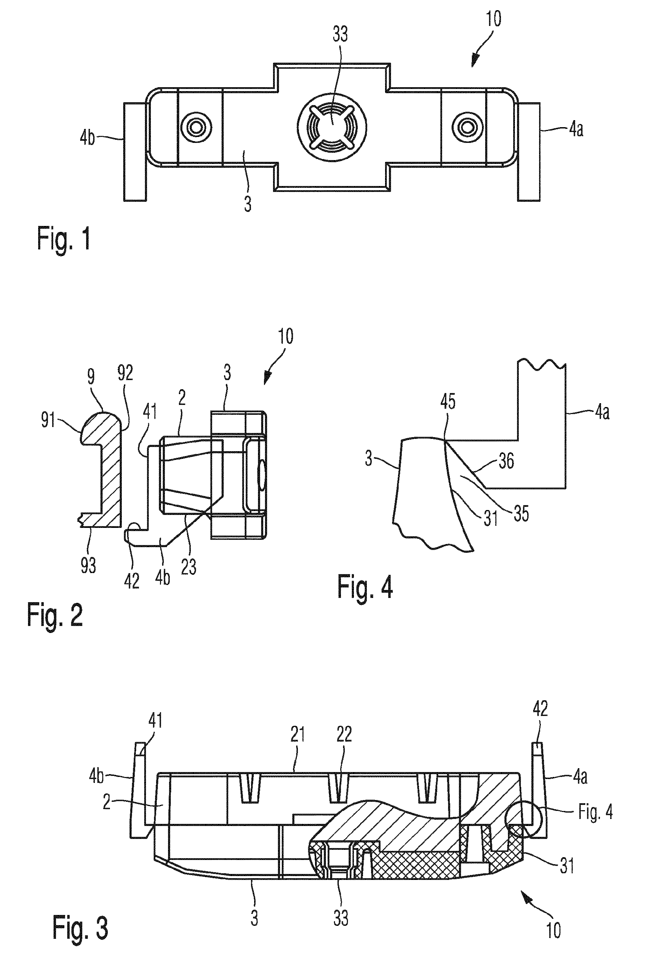

Anhand der Fig. 1 bis 4 wird eine erfindungsgemäße Ausführungsform eines Bremsschuhs mit Justierhilfe erläutert. Dabei zeigt Fig. 1 die rückwärtige, der Reibfläche des Bremsbelages abgewandte Seite. Fig. 2 zeigt eine Seitenansicht. Fig. 3 zeigt eine Ansicht von oben bzw. unten und Fig. 4 erläutert die Befestigung der Justierhilfe am Träger des Bremsschuhs. Gleiche Bezugszeichen bezeichnen gleiche Bestandteile der Erfindung.

Der Bremsschuh 10 enthält einen Bremsbelag 2 und einen Träger 3. Der Träger 3 kann beispielsweise aus einem Polymer oder einem Metall hergestellt sein, beispielsweise als Stanzteil oder als Spritzgussteil. Am Träger 3 ist eine Befestigung 33 vorhanden, mit welcher der Bremsschuh in einer Felgenbremse montiert werden kann. Die Befestigungsvorrichtung 33 ist im dargestellten Ausführungsbeispiel ein Klickverschluss, mit welchem der Bremsbelag an den Kolben einer hydraulischen Felgenbremse geclipst werden kann. In anderen Ausführungsformen der Erfindung kann die Befestigungsvorrichtung 33 auch eine Verschraubung oder eine andere, an sich bekannte Befestigungsvorrichtung sein.

Weiterhin enthält der Bremsschuh 10 einen Bremsbelag 2. Der Bremsbelag 2 weist eine Reibfläche 21 auf, welche bei Betrieb der Bremse mit einer zugeordnete Reibfläche an der Seitenflanke einer Felge in Kontakt gebracht wird. Der Bremsbelag 2 kann optionale Rillen 22 aufweisen, welche zur Entwässerung oder zur Abfuhr von Belagverschleiß und Staub dienen. Der Bremsbelag 2 kann in an sich bekannter Weise aus einer Gummimischung, Kork, Polymeren oder anderen an sich bekannten Materialien bestehen.

Erfindungsgemäß wird nun vorgeschlagen, zumindest eine Justierhilfe 4 vorzusehen, welche mit dem Bremsbelag 2 und/oder dem Träger 3 lösbar verbunden ist. Im dargestellten Ausführungsbeispiel ist die Justierhilfe 4 mit dem Träger 3 durch ein Filmscharnier 45 verbunden. Das Filmscharnier wird gebildet durch einen Spalt 35 auf der Rückseite des Trägers 3, welcher durch zwei keilförmige Begrenzungsflächen 31 bzw. 36 am Träger bzw. an der Justierhilfe 4 begrenzt ist. Die dargestellte Ausführungsform der Erfindung erlaubt die Herstellung der Justierhilfe 4 in einem Arbeitsgang zusammen mit dem Träger 3 in einem einzigen Spritzgussprozess, wobei das Filmscharnier 45 aufgrund der Form der Bauteile im selben Arbeitsgang ausgebildet und entformt werden kann.

Die Justierhilfe 4 ist im dargestellten Ausführungsbeispiel doppelt vorhanden, nämlich als vordere Justierhilfe 4a und als hintere Justierhilfe 4b. Dies erlaubt die gleichzeitige Justage von Abstand und Winkel des Bremsschuhs relativ zur Felge 9. In anderen Ausführungsformen der Erfindung kann nur eine Justierhilfe 4 vorhanden sein oder die Justierhilfe 4 kann eine andere Form aufweisen. Im einfachsten Ausführungsbeispiel besteht die Justierhilfe aus einem einzigen Zapfen, welcher die Oberkante, die Unterkante oder die Mittellinie des Bremsschuhs markiert, so dass durch Ausrichten des Zapfens auf einen vorgebbaren Punkt der Felge 9 die Justage des Bremsschuhs vorgenommen werden kann.

Wie insbesondere aus Fig. 2 ersichtlich ist, ist die in den Figuren dargestellte Justierhilfe 4 in einer orthogonalen Ebene zur Felge flächig ausgebildet, so dass sich eine erste Anlagefläche 41 und eine zweite Anlagefläche 42 ergibt. Die erste Anlagefläche 41 steht etwa 0,8 mm bis etwa 3 mm über die Reibfläche 21 des Bremsbelages 2 über und erlaubt dadurch die einfache Einstellung des Lüftungsspiels der Bremse. Die zweite Anlagefläche 42 weist einen Normalenvektor auf, welcher mit dem Normalenvektor der Reibfläche 21 des Bremsbelags 2 einen Winkel von etwa 70° bis etwa 100° einschließt. Darüber hinaus ist die zweite Anlagefläche 42 von einer Verlängerung der Unterkante 23 der Reibfläche etwa 0 mm bis etwa 3 mm beabstandet.

Fig. 2 zeigt weiterhin einen Ausschnitt aus dem Querschnitt durch eine Felge 9. Die Felge 9 weist eine Reibfläche 92 an der Flanke auf, welche mit der Reibfläche 21 des Bremsbelages 2 zusammenwirkt, um die für den Bremsvorgang erforderliche Reibung zu erzeugen. Darüber hinaus weist die Felge 9 ein Felgenhorn 91 auf, welches der Befestigung eines Reifens dient. In anderen Ausführungsformen der Erfindung kann die Felge 9 ein anderes Querschnittsprofil haben und beispielsweise als Schlauchreifenfelge dazu vorgesehen sein, einen Reifen mit einer Klebeverbindung aufzunehmen.

Die Felge 9 kann in an sich bekannter Weise aus Stahl, Aluminium oder Kohlefaser bestehen. Die Reibfläche 92 kann eine reibungserhöhende und/oder verschleißmindernde Beschichtung aufweisen.

Zur Montage der Felgenbremse am Rahmen eines Fahrzeuges, beispielsweise eines Fahrrades, wird der Bremsschuh 10 in den Nehmerzylinder einer hydraulischen Felgenbremse eingesetzt und der Nehmerzylinder in seiner zugeordneten Halterung so justiert, dass die erste Anlagefläche 41 an der Reibfläche 92 der Felge anliegt. Weiterhin wird die zweite Anlagefläche 42 so positioniert, dass diese an der Unterseite 93 der Felge 9 anliegt. In diesem Zustand wird das Nehmerzylindergehäuse der Felgenbremse am Rahmen fixiert, beispielsweise durch Anziehen der zugehörigen Verschraubung oder Schließen eines Schnellspannhebels. Nach dem Entfernen der Justierhilfe 4a und 4b ist der Bremsschuh 10 im gewünschten Abstand und mit der richtigen Höhenlage relativ zur Felge 9 fixiert, ohne dass es einer aufwändigen Justage bedarf.

Zur Montage einer mechanischen V-Brake oder einer Seitenzugbremse wird zunächst der Bremsarm bzw. der Bremskörper am Rahmen des Fahrzeuges montiert und dort festgelegt. Im nachfolgenden Verfahrensschritt wird der Bremsschuh 10 mit der Justierhilfe 4 in die Bremse eingesetzt und die Verschraubung des Bremsschuhs lose vorgespannt. Im folgenden Schritt der Feinjustage werden wiederum die Anschlagflächen 41 und 42 mit den zugeordneten Flächen 92 und 93 der Felge in Kontakt gebracht und der Bremsschuh in dieser Lage endgültig am Bremskörper fixiert. Auch im Fall einer mechanischen Bremse ist somit der Bremsbelag 2 nach Entfernen der Justierhilfe 4 im richtigen Abstand und in der richtigen Höhe und Winkellage relativ zur Felge 9 fixiert.

Sofern zur Befestigung der Justierhilfe das in den Figuren dargestellte Filmscharnier verwendet wird, kann dieses eine Sollbruchstelle bilden. Bei der erstmaligen Betätigung der Bremse wird über die Anlagefläche 41 eine Kraft auf den Bremsschuh 10 eingeleitet, welche zum Abreißen des als Sollbruchstelle fungierenden Filmscharniers 45 führt. Dadurch wird die zumindest eines Justierhilfe 4 automatisch bei der ersten Betätigung der Bremse vom Bremsschuh 10 entfernt, so dass die Reibfläche 21 des Bremsbelags 2 in Kontakt mit der Felge 9 kommen kann. Hierdurch wird einerseits eine komfortable Entfernung der Justierhilfe 4 ermöglicht und andererseits die Sicherheit für den Benutzer des Fahrzeugs erhöht, da die Justierhilfe 4 auch dann automatisch bei der ersten Betätigung der Bremse entfernt wird, wenn dies vom Monteur bei der Montage der Bremsschuhe 10 vergessen wurde.

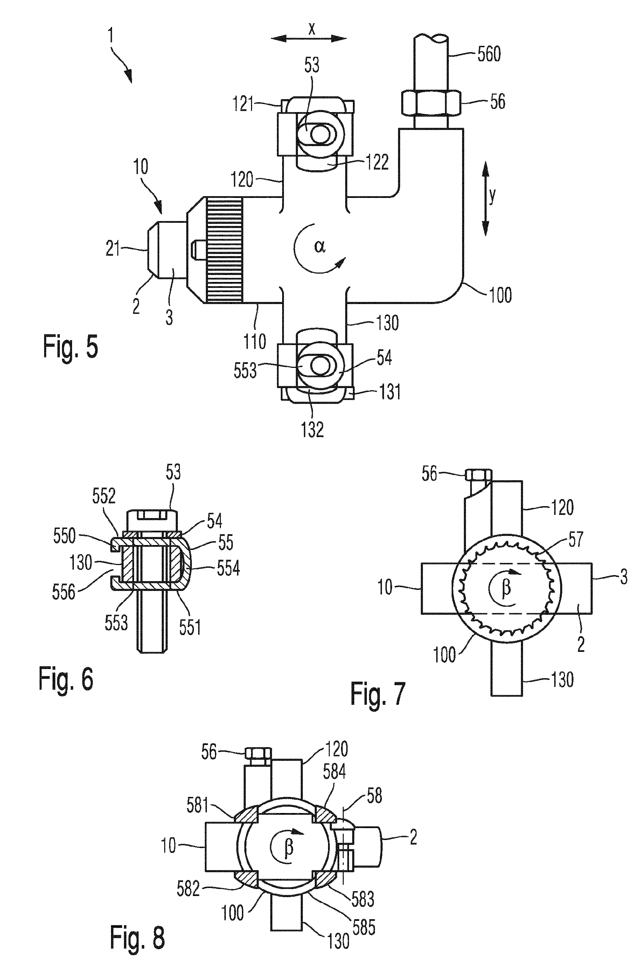

Anhand der Fig. 5, 6, 7 und 8 wird eine erste Ausführungsform eines Nehmerzylindergehäuses 100 gezeigt, welches einfach am Rahmen eines Fahrzeuges, beispielsweise eines Fahrrads, montiert werden kann.

Das Nehmerzylindergehäuse 100 ist Teil einer hydraulischen Felgenbremse 1. Das Nehmerzylindergehäuse 100 enthält zumindest einen Druckraum und einen im Druckraum verschieblich gelagerten Kolben. Dem Druckraum kann über eine Hydraulikleitung 560, welche mit einer Verschraubung 56 am Nehmerzylindergehäuse 100 befestigt ist, ein Hydraulikfluid zugeführt werden, so dass der Kolben aus dem Druckraum ausgeschoben wird und dabei einen Bremsschuh 10 mit einem Bremsbelag 2 gegen einen Reibpartner führt. Bei abnehmendem Druck des Hydraulikfluides im Druckraum kann der Kolben über eine Rückholfeder in den Druckraum eingezogen werden.

Zur Befestigung des Nehmerzylindergehäuses 100 am Rahmen steht zumindest ein Befestigungsarm 120 oder 130 zur Verfügung. Im dargestellten Ausführungsbeispiel ist sowohl ein oberer Befestigungsarm 120 als auch ein unterer Befestigungsarm 130 vorhanden. Der zumindest eine Befestigungsarm kann einstückig mit dem Nehmerzylindergehäuse 100 verbunden sein, beispielsweise bei Fertigung des Nehmerzylindergehäuses 100 in einem Druckguss- oder Spritzgussprozess. Alternativ kann zumindest ein Befestigungsarm auch durch Kleben, Schweißen oder sonstige, an sich bekannte Fügetechniken mit dem Nehmerzylindergehäuse 100 verbunden sein.

Auf den zumindest einem Befestigungsarm ist ein Gleitstück 55 aufgesetzt, welches entlang der Längserstreckung des Befestigungsarmes verschiebbar ist und in welches eine Schraube 53 eingreift. Wie aus Fig. 6 ersichtlich ist, ist das Gleitstück 55 im dargestellten Ausführungsbeispiel als Stanzteil aus einem federharten Blech gefertigt. Das Gleitstück enthält eine obere Anlagefläche 552 sowie eine untere Anlagefläche 551, welche über einen Seitensteg 554 miteinander verbunden sind. An der dem Seitensteg 554 gegenüberliegenden Seite ist das Druckstück durch Anschlagelemente 550 teilweise geschlossen, so dass die Anschlagelemente 550 einen Spalt 556 einschließen. Somit kann zur Montage des Gleitstückes 55 dieses federnd auseinandergebogen und über den Befestigungsarm 130 gestreift werden. Zur Verschiebung des Nehmerzylindergehäuses am Rahmen kann somit nach Lockern der Schraubverbindung 53 das Gleitstück 55 entlang des Befestigungsarms 130 verschoben werden. Diese Verstellrichtung ist in Fig. 5 als Y-Richtung eingetragen. Der Befestigungsarm 130 weist hierzu ein Langloch 132 auf. Der Befestigungsarm 120 weist ein Langloch 122 auf. Die Langlöcher definieren somit den Verstellbereich der Schraubverbindung 53 entlang der Längserstreckung der Befestigungsarme 120 und 130.

Um ein Verlieren der Gleitstücke 55 zu vermeiden, können an den Befestigungsarmen 130 und 120 optionale Anschlagelemente 121 und 131 vorhanden sein, welche verhindern, dass die Gleitstücke 55 über die Länge der Befestigungsarme hinaus verschoben werden. Die Anschlagelemente 121 und 131 können in einigen Ausführungsformen der Erfindung beim Urformen des Nehmerzylindergehäuses 100 mit den Befestigungsarmen 120 und 130 unmittelbar angeformt werden, wenn diese eine Form aufweisen, welche einfach aus dem Formwerkzeug entformt werden kann.

Die dem Befestigungsarm 130 bzw. 120 zugewandte Fläche der Oberseite 552 und/oder der Unterseite 551 des Druckstückes 55 kann eine optionale Riffelung aufweisen, so dass die Reibung zwischen dem Gleitstück und dem Befestigungsarm erhöht wird und/oder eine formschlüssige Verbindung zwischen beiden Bauteilen ermöglicht wird, so dass eine sichere Befestigung des Nehmerzylindergehäuses 100 auch mit geringen Schraubenvorspannungen der Verschraubung 53 erzielt werden kann. Dem gleichen Zweck kann eine optionale Zahnscheibe 54 dienen, welche gleichzeitig auch eine Sicherung der Verschraubung 53 gegen versehentliches Lösen darstellt.

Die Oberseite 552 und die Unterseite 551 können weiterhin ein Langloch 553 aufweisen, welches in etwa senkrecht zum ersten Langloch 122 bzw. 132 orientiert ist. Dieses Langloch erlaubt eine Verstellung quer zur Längserstreckung der Befestigungsarme 120 und 130. Diese Verstellrichtung ist in Fig. 5 als X-Richtung eingetragen. Sofern die X- bzw. Y-Richtung am oberen bzw. unteren Befestigungsarm 120 und 130 nicht synchron verstellt werden, kann auch eine Justierung des Anlagewinkels α der Reibfläche 21 des Bremsbelages 2 erfolgen.

Um den Bremsbelag 2 tangential zur Felge 9 auszurichten, ist wie in Fig. 7 bzw. Fig. 8 ersichtlich eine Verstellung um den Winkel β erforderlich, wenn nicht der Rahmen der Fahrzeugs eine eindeutige Lagebeziehung dieser Bauteile vorgibt. In einer ersten Ausführungsform, welche in Fig. 7 dargestellt ist, kann diese Winkelverstellung durch eine Verzahnung 57 erfolgen, welche sowohl am Träger 3 des Bremsschuhs 10 als auch am Nehmerzylindergehäuse 100 vorhanden ist. Nach Ausbau des Bremsschuhs 10 kann dieser um den gewünschten Winkel β gedreht wieder eingesetzt werden, so dass die Verzahnung entsprechend einrastet.

Fig. 8 zeigt eine alternative Einstellung des Winkels β, bei welcher ein Führungselement 58 zumindest einen vorstehenden Führungszapfen aufweist. Im dargestellten Ausführungsbeispiel sind vier Führungszapfen 581, 582, 583 und 584 vorhanden, welche den Bremsschuh 10 allseits umgreifen und hierdurch eine Verdrehung zuverlässig verhindern und auftretende Drehmomente auf das Nehmerzylindergehäuse 100 abtragen können.

Das Führungselement 58 ist mit einer Klemmschelle 585 versehen, welche auf einem Längsabschnitt 110 des Nehmerzylindergehäuses 100 drehbar montiert ist. Durch Lösen der Klemmschelle 585 kann der Winkel β somit stufenlos an die Erfordernisse des jeweiligen Fahrzeugs eingestellt werden. Der Längsabschnitt 110 des Nehmerzylindergehäuses 100 kann mit einer optionalen Strukturierung versehen sein, beispielsweise einem Rändel, um die Reibungskräfte zwischen der Klemmschelle 585 und dem Nehmerzylindergehäuse zu erhöhen und/oder einen Formschluss zwischen diesen Teilen zu ermöglichen. In einigen Ausführungsformen der Erfindung kann das Führungselement 58 und die Klemmschelle 585 einstückig ausgeführt sein. In anderen Ausführungsformen der Erfindung können das Führungselement 58 und die Klemmschelle 585 mehrteilig ausgeführt sein und bei der Montage am Nehmerzylindergehäuse 100 zusammengefügt werden, beispielsweise durch Klemmung oder Verschraubung.

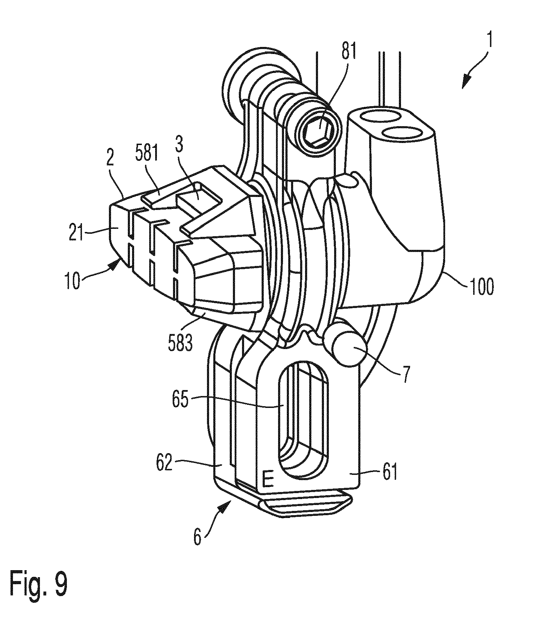

Anhand der Fig. 9 bis 15 wird eine alternative Befestigung eines Nehmerzylindergehäuses 100 einer hydraulischen Felgenbremse 1 mittels einer Klemmschelle 6 gezeigt.

Im Nehmerzylindergehäuse 100 ist zumindest ein Druckraum ausgeformt, in welchem Kolben verschieblich gelagert ist, so dass die Reibfläche 21 des Bremsbelages 2 des Bremsschuhs 10 hydraulisch gegen die Flanke einer Felge führbar ist. Das Nehmerzylindergehäuse 100 ist in einer zweiteiligen Klemmschelle 6 aufgenommen, welche ein Vorderteil 61 und ein Hinterteil 62 enthält. Hierzu ist in der Klemmschelle 6 ein Aufnahmeraum 68 ausgeformt. Das Nehmerzylindergehäuse 100 kann in der Klemmschelle 6 drehbar und/oder verschiebbar sein, um die relative Lage zwischen dem Bremsbelag 2 und der Seitenflanke einer Felge an unterschiedliche Rahmengeometrien anzupassen und/oder um Toleranzen bei der Fertigung des Rahmens auszugleichen. Um eine Verstellung entlang der Längserstreckung der Klemmschelle 6 zu ermöglichen, kann die Klemmschelle ein Langloch 65 aufweisen.

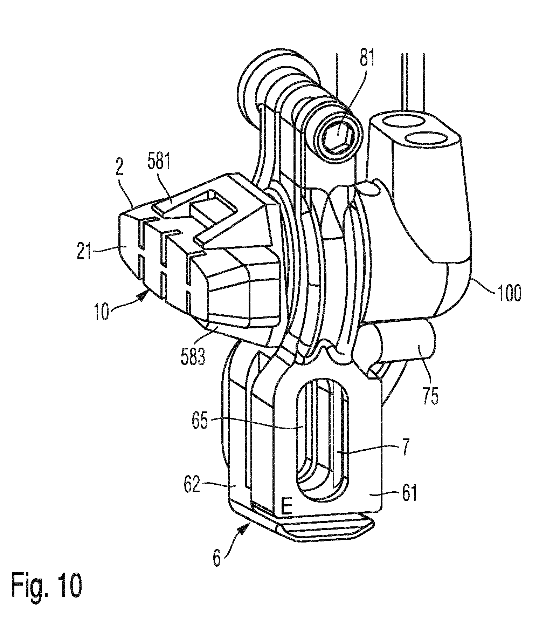

Erfindungsgemäß wird vorgeschlagen, dass am Rahmen des Fahrzeugs ein Pilzkopfzapfen angeordnet ist, welcher in das Langloch 65 eingreift. Um die Klemmschelle 6 und damit das Nehmerzylindergehäuse 100 am Rahmen zu fixieren, enthält das Vorderteil 61 der Klemmschelle 6 eine Bohrung 66, in welcher ein Exzenterbolzen 7 aufgenommen ist. Die Längserstreckung des Excenterbolzens 7 verläuft parallel zur Längserstreckung des Langlochs 65. Der Exzenterbolzen 7 kann von einer geöffneten Stellung in eine geschlossene Stellung bewegt werden. Fig. 9 zeigt den Exzenterbolzen 7 in der geöffneten Stellung und Fig. 10 zeigt den Exzenterbolzen 7 in einer geschlossenen Stellung.

In der geöffneten Stellung ist der gesamte Querschnitt des Langlochs 65 frei, so dass ein Pilzkopfzapfen durch das Langloch 65 hindurchgeschoben werden kann. In der geschlossenen Stellung wird der freie Querschnitt des Langloches 65 zumindest teilweise durch den Exzenterbolzen 7 verlegt, so dass der breitere Teil des Pilzkopfzapfens nicht mehr aus dem Langloch 65 herausfallen kann und die Klemmschelle 6 somit zwischen dem Kopf des Pilzkopfzapfens und dem Rahmen sicher gehalten wird. Dabei wird gleichzeitig vom Pilzkopfzapfen und dem Exzenterbolzen 7 eine Haltkraft über das Vorderteils 61 auf das Hinterteil 62 der Klemmschelle 6 ausgeübt, so dass die Klemmschelle im Zusammenwirken mit der Verschraubung 81 geschlossen und das Nehmerzylindergehäuse 100 sicher gehalten ist.

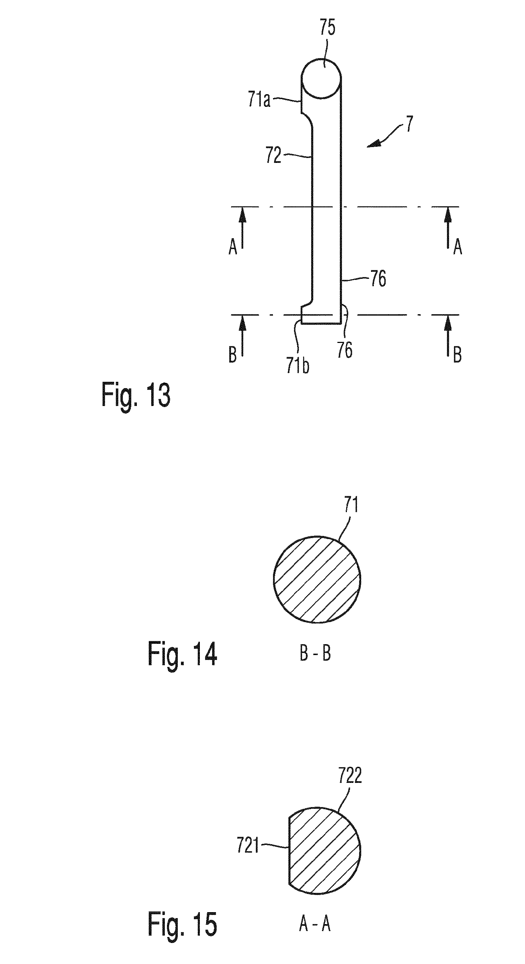

Die erste Ausführungsform des Exzenterbolzens 7 ist in Fig. 13, 14 und 15 näher erläutert. Dieser besteht im einfachsten Fall aus einem Rundmaterial, beispielsweise einem Draht mit einem Durchmesser zwischen etwa 5 mm und etwa 15 mm oder einem Durchmesser zwischen etwa 8 mm und etwa 12 mm. Ein kürzerer Längsabschnitt kann um etwa 90° gebogen werden, so dass sich ein Bedienelement 75 ergibt. Der Schaft 76 des Exzenterbolzens 7 weist zumindest einen ersten Längsabschnitt 71 auf, welcher den ursprünglichen runden Querschnitt des Exzenterbolzens aufweist. Im dargestellten Ausführungsbeispiel weist der Exzenterbolzen 7 zwei erste Längsabschnitte 71a und 71b auf. Daneben existiert zumindest ein zweiter Längsabschnitt 72, welcher durch einen Kreisbogen und eine Kreissehne begrenzt wird. Der zweite Längsabschnitt 72 kann durch eine Einfräsung in den Schaft 76 erhalten werden.

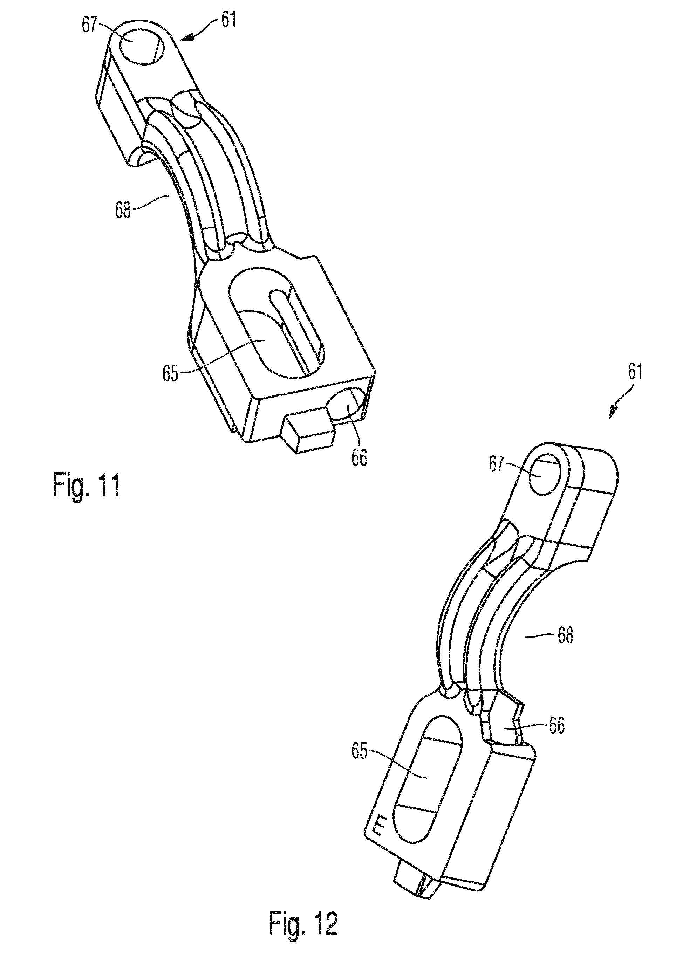

Wie anhand der Fig. 11, 12 und 13 ersichtlich ist, dienen die ersten Längsabschnitte 71a und 71b zur Führung des Exzenterbolzens 7 in der Bohrung 66 des Bauteils 61 der Klemmschelle 6. Da der runde Querschnitt gemäß Fig. 14 komplementär zur Bohrung 66 geformt ist, kann der Exzenterbolzen 7 mit geringen Spiel drehbar im Vorderteil 61 aufgenommen sein.

Wie anhand der Fig. 9, 11 und 13 ersichtlich ist, ist die Kreissehne 721 in der geöffneten Stellung des Exzenterbolzens 7 dem Querschnitt des Langloches 65 zugewandt, so dass der volle Querschnitt des Langlochs 65 zur Verfügung steht, um den Pilzkopfzapfen durch das Langloch 65 hindurchzuführen. Durch Drehung des Exzenterbolzens 7 um mindestens 90 und maximal 270° kommt der Kreisbogen 722 im Langloch 65 zu liegen. Da der Kreisbogen 722 einen größeren Abstand von der Längsachse des Schaftes 76 des Exzenterbolzens 7 aufweist als die Kreissehne 721, wird der lichte Querschnitt durch den Exzenterbolzen teilweise verlegt. Dies kann ausreichen, um eine sichere Verriegelung der Klemmschelle 6 hinter dem Pilzkopfzapfen zu ermöglichen.

Die Klemmschelle 6 gemäß der vorliegenden Erfindung weist somit eine integrierte Verriegelung auf, welche werkzeugfrei mit nur einem Handgriff bedienbar ist. Aufgrund der geringeren Anzahl an Bauteilen gegenüber bekannten Schnellspannern ist das Gewicht reduziert und die Zuverlässigkeit kann vergrößert sein.

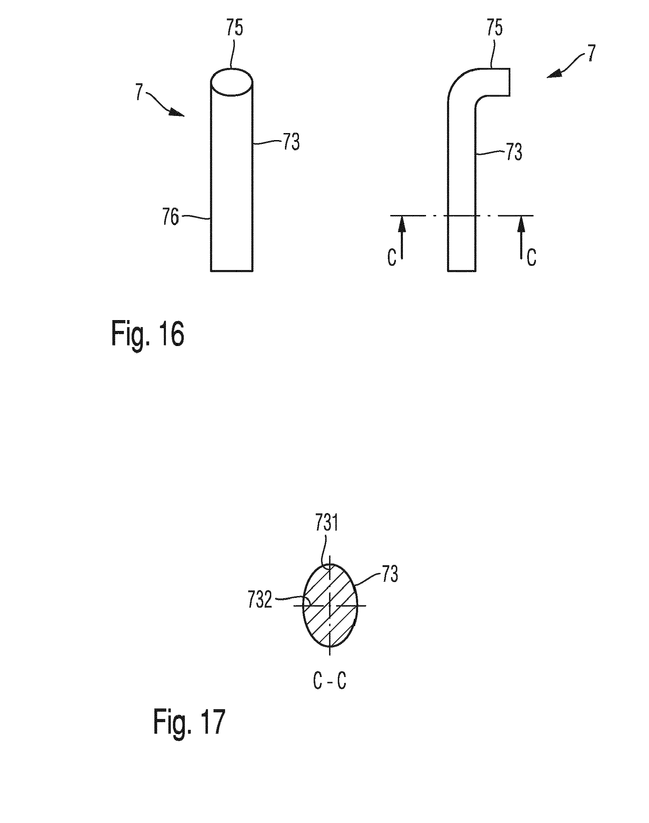

Die zweite Ausführungsform des Exzenterbolzens 7 ist in Fig. 16 und 17 näher erläutert. Diese besteht im einfachsten Fall aus einem Material, beispielsweise einem Draht, mit elliptischem bzw. ovalen Querschnitt. Die lange Halbachse 731 kann in einigen Ausführungsformen eine Länge zwischen etwa 5 mm und etwa 15 mm oder eine Länge zwischen etwa 8 mm und etwa 12 mm aufweisen. Die Länge der langen Halbachse kann in etwa dem Durchmesser der Bohrung 66 im Vorderteil 61 der Klemmschelle 6 entsprechen, so dass der Excenterbolzen in die Bohrung 66 eingeführt und dort drehbar aufgenommen werden kann.

Ein kürzerer Längsabschnitt kann um etwa 90° gebogen werden, so dass sich ein Bedienelement 75 ergibt. Der Schaft 76 des Exzenterbolzens 7 weist zumindest einen Längsabschnitt 73 auf, welcher den oben beschriebenen elliptischen Querschnitt aufweist. Im dargestellten Ausführungsbeispiel weist der Exzenterbolzen 7 über die gesamte Länge den beschriebenen elliptischen Querschnitt auf.

In der geöffneten Stellung des Exzenterbolzens 7 ist die kurze Halbachse 732 dem Querschnitt des Langloches 65 zugewandt, so dass der volle Querschnitt des Langlochs 65 zur Verfügung steht, um den Pilzkopfzapfen durch das Langloch 65 hindurchzuführen. Durch Drehung des Exzenterbolzens 7 um mindestens 90 und maximal 270° kommt die lange Halbachse 731 im Langloch 65 zu liegen. Da die lange Halbachse 731 einen größeren Abstand von der Längsachse des Schaftes 76 des Exzenterbolzens 7 aufweist als die kurze Halbachse 732, wird der lichte Querschnitt durch den Exzenterbolzen teilweise verlegt. Dies kann ausreichen, um eine sichere Verriegelung der Klemmschelle 6 hinter dem Pilzkopfzapfen zu ermöglichen.

Selbstverständlich ist die Erfindung nicht auf die in den Figuren dargestellte Ausführungsform beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Merkmale definieren, so dient diese Bezeichnung der Unterscheidung zweier gleichartiger Merkmale, ohne eine Rangfolge festzulegen.

## Patentansprüche

1. Bremsschuh (10) für eine Felgenbremse (1) mit einem Bremsbelag (2) und einem Träger (3),
**dadurch gekennzeichnet, dass**
der Bremsschuh (2) weiterhin zumindest eine Justierhilfe (4) enthält, welche mit dem Bremsbelag (2) und/oder dem Träger (3) lösbar verbunden ist.

2. Bremsschuh nach Anspruch 1, **dadurch gekennzeichnet, dass** die Justierhilfe (4) mit dem Bremsbelag (2) und/oder dem Träger (3) durch eine Sollbruchstelle (45) verbunden ist.

3. Bremsschuh nach Anspruch 1 oder 2, **dadurch gekennzeichnet, dass** die Justierhilfe (4) zumindest eine erste Anlagefläche (41) aufweist, welche etwa 0,8 mm bis etwa 3 mm oder etwa 1 mm bis etwa 2 mm oder etwa 1,5 mm über eine Reibfläche (21) des Bremsbelages (2) übersteht
und/oder
dass die Justierhilfe (4) zumindest eine zweite Anlagefläche (42) aufweist, deren Normalenvektor mit dem Normalenvektor der Reibfläche (21) einen Winkel von etwa 70° bis etwa 100° einschließt und welche von einer Verlängerung der Unterkante (23) der Reibfläche (21) einen Abstand von etwa 0 mm bis etwa 3 mm aufweist.

4. Bremsschuh nach einem der Ansprüche 1 bis 3, **dadurch gekennzeichnet, dass** die Justierhilfe (4) und der Träger (3) mit einem Filmscharnier miteinander verbunden sind
und/oder
dass die Justierhilfe (4) und der Träger (3) in einem Spritzgussverfahren erhältlich sind.

5. Felgenbremse (1) mit einem Bremsschuh (10) nach einem der Ansprüche 1 bis 4.

6. Verfahren zur Montage einer Felgenbremse (1) mit zumindest einem Bremsschuh (10) mit einem Bremsbelag (2) und einem Träger (3), **dadurch gekennzeichnet, dass** der Bremsschuh (10) weiterhin zumindest eine Justierhilfe (4) enthält, welche mit dem Bremsbelag (2) und/oder dem Träger (3) lösbar verbunden ist, wobei zur Montage zumindest eine erste Anlagefläche (41) und/oder zumindest eine zweite Anlagefläche (42) der Justierhilfe (4) in Kontakt mit einer Felge gebracht und die Justierhilfe (4) nach der Befestigung des Bremsschuhs (10) entfernt wird.

7. Verfahren nach Anspruch 6, **dadurch gekennzeichnet, dass** die Justierhilfe (4) mit dem Bremsbelag (2) und/oder dem Träger (3) durch eine Sollbruchstelle (45) verbunden ist und die Justierhilfe (4) bei erstmaliger Betätigung der Bremse vom Bremsschuh (10) gelöst wird.

8. Hydraulische Felgenbremse (1) mit zumindest einem, am Rahmen eines Fahrzeuges befestigbaren Nehmerzylindergehäuse (100), welches zumindest einen Druckraum und einen im Druckraum verschiebbar gelagerten Kolben enthält, **dadurch gekennzeichnet, dass** das Nehmerzylindergehäuse zumindest einen Befestigungsarm (120, 130) aufweist, welcher ein erstes Langloch (122, 132) enthält, und weiterhin zumindest ein Gleitstück (55) vorhanden ist, welches entlang der Längserstreckung des Befestigungsarmes (120, 130) verschiebbar ist.

9. Felgenbremse nach Anspruch 8, **dadurch gekennzeichnet, dass** der Befestigungsarm (120, 130) und das Nehmerzylindergehäuse (100) einstückig miteinander verbunden sind
und/oder
dass der Befestigungsarm (120, 130) an seinem vom Nehmerzylindergehäuse (100) entfernten Ende ein Anschlagelement (121, 131) aufweist.

10. Felgenbremse nach einem der Ansprüche 8 bis 9, **dadurch gekennzeichnet, dass** das Gleitstück (55) eine Riffelung aufweist
und/oder
dass das Gleitstück (55) ein zweites Langloch (553) aufweist, welches in etwa senkrecht zum ersten Langloch (122, 132) orientiert ist
und/oder
dass das Gleitstück (55) als Stanzteil ausgeführt ist.

11. Felgenbremse nach einem der Ansprüche 8 bis 10, **dadurch gekennzeichnet, dass** ein Bremsschuh (10) eine dem Nehmerzylindergehäuse (100) zugewandte Fläche mit einer Verzahnung aufweist, welche bei Montage des Bremsschuhs (10) in eine komplementäre Verzahnung (57) des Nehmerzylindergehäuses (100) eingreift, wobei optional
die Verzahnung (57) eine Tiefe aufweist, welche größer ist als der Hub des Nehmerkolbens im Druckraum.

12. Felgenbremse nach einem der Ansprüche 8 bis 11, weiterhin enthaltend ein Führungselement (58), welches zumindest einen vorstehenden Führungszapfen (581, 582, 583, 584) aufweist und welches am Nehmerzylindergehäuse (100) drehbar befestigt ist, wobei optional
das Führungselement (58) zumindest eine Klemmschelle (585) aufweist, welche einen Abschnitt des Nehmerzylindergehäuses (100) außen umgreift.

13. Hydraulische Felgenbremse (1) mit zumindest einem, am Rahmen eines Fahrzeuges befestigbaren Nehmerzylindergehäuse (100), welches zumindest einen Druckraum und einen im Druckraum verschiebbar gelagerten Kolben enthält,
wobei das Nehmerzylindergehäuse (100) in einer Klemmschelle (6) zur Befestigung am Rahmen aufgenommen ist, welche ein Langloch (65) enthält
**dadurch gekennzeichnet, dass** weiterhin ein Excenterbolzen (7) vorhanden ist, dessen Längserstreckung parallel zur Längserstreckung des Langlochs (65) verläuft.

14. Hydraulische Felgenbremse nach Anspruch 13, **dadurch gekennzeichnet, dass** der Excenterbolzen (7) in einer Bohrung (66) aufgenommen ist, welche in einem Vorderteil (61) der Klemmschelle (6) angebracht ist und deren Längserstreckung parallel zur Längserstreckung des Langlochs (65) verläuft
und/oder
dass der Excenterbolzen (7) in zumindest einem ersten Längsabschnitt (71) einen runden Querschnitt aufweist und der Querschnitt in zumindest einem zweiten Längsabschnitt (72) von einer Kreissehne (721) und einem Kreisbogen (722) begrenzt wird
und/oder
dass der Excenterbolzen (7) zumindest einen Längsabschnitt (73) mit einem elliptischen Querschnitt aufweist, wobei die Länge der langen Halbachse (731) in etwa dem Durchmesser der Bohrung (66) im Vorderteil (61) der Klemmschelle (6) entspricht.

15. Hydraulische Felgenbremse nach einem der Ansprüche 13 bis 14, **dadurch gekennzeichnet, dass** am Rahmen des Fahrzeuges zumindest ein Pilzkopfzapfen vorhanden ist, welcher vom Excenterbolzen (7) hintergreifbar ist.
